(19) Europäisches Patentamt
European Patent Office
Office européen des brevets

(11) **EP 2 525 522 A1**

(12) **EUROPEAN PATENT APPLICATION**

(43) Date of publication:
**21.11.2012 Bulletin 2012/47**

(51) Int Cl.:
***H04L 1/18*** (2006.01)

(21) Application number: **11305614.7**

(22) Date of filing: **20.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventor: **Braun, Volker**
**70176 Stuttgart (DE)**

(74) Representative: **Wetzel, Emmanuelle et al**
**Alcatel-Lucent Deutschland AG**
**Intellectual Property & Corporate Standards**
**Lorenzstrasse 10**
**70435 Stuttgart (DE)**

Remarks:
Amended claims in accordance with Rule 137(2) EPC.

(54) **Method for retransmitting data from a first network to a second network node in a radio communication system, first network node and second network node thereof**

(57)    The invention relates to a method (MET1) for retransmitting data from a first network node (BS) of a radio communication system to a second network node (MS) of the radio communication system. The method (MET1) comprises the steps of transmitting (M1/1) a first data block (D1) from the first network node (BS) to the second network node (MS), the first data block (D1) comprise an information part (INFO-BITS), determining (M1/7) at the first network node (BS) a second data block (D2) with redundancy information of all data elements of the first data block (D1) by applying an information compression to all the data elements, and transmitting (M1/12) the second data block (D2) from the first network node (BS) to the second network node (MS). The invention further relates to the first network node (BS) for use in the radio communication system and to the second network node (MS) for use in the radio communication system.

FIG. 2

**Description**

**FIELD OF THE INVENTION**

The invention relates to wireless communications and, more particularly but not exclusively, to retransmission of data in wireless communications.

**BACKGROUND**

HARQ (HARQ = hybrid automatic repeat request) with chase combining or incremental redundancy is widely used in modern packet based wireless communication systems such as UMTS systems (UMTS = Universal Mobile Telecommunication Systems) or LTE systems (LTE = Long Term Evolution). HARQ is used in these systems in conjunction with adaptive modulation and coding so as to compensate for transmission errors caused by imperfect link adaptation. Imperfect link adaptation causes significant throughput degradation as compared to the theoretical limits, despite of using HARQ. With HARQ, typically a CRC check (CRC = Cyclic Redundancy Check) is performed upon reception of a first transmission of an encoded data packet and the result of the CRC check, PASS or FAIL, is reported to the transmitter as an ACK (ACK = acknowledgement) or a NACK (NACK = Negative Acknowledgement), respectively. In case of NACK, the transmitter performs a retransmission of the data packet and soft combining of the codewords of the received first transmission and the received retransmission is performed by the receiver before the decoding. Soft combining improves error rate performance as compared to simply discarding the first transmission attempt at the receiver.
With chase combining the retransmission uses the same codeword size and same RV parameters (RV = redundancy version), i.e. puncturing patterns, as the first transmission. The retransmission of the whole codeword size of the first transmission may consume more radio link capacity than required. With incremental redundancy only a subset of the information bits or none of the information bits of the first transmission and only parity bits are retransmitted. By using such kind of HARQ process the consumption of radio link capacity can be reduced but the transmitter of the retransmission usually does not know, which subset of information bits should be retransmitted for performing a complete error-free recovery of the data of the first transmission.

**SUMMARY**

The way of performing a retransmission of data in a radio communication system effects an amount of radio resources required for signalling information, effects an amount of radio resources required for the retransmissions, effects transmission delay for the data and effects data handling at the transmitter and at the receiver.
It is an object of the invention to provide an efficient retransmission of data in a radio communication system.
The object is achieved by a method for retransmitting data from a first network node of the radio communication system to a second network node of the radio communication system and wherein the method comprises the steps of transmitting a first data block from the first network node to the second network node, the first data block comprising an information part, determining at the first network node a second data block with redundancy information of all data elements of the first data block by applying an information compression to all the data elements, and transmitting the second data block from the first network node to the second network node. The object is further achieved by a first network node for use in a radio communication system and by a second network node for use in a radio communication system. The first network node may be a base station, a relay station or a mobile station. Likewise, the second network node may be a mobile station, a relay station or a base station.
The method offers a first benefit of improving a reliability of all soft bits of a first transmission of the first data block in comparison to a conventional HARQ process based on incremental redundancy.
The method offers a second benefit of reducing load on a radio link between the first network node and the second network node in comparison to a conventional HARQ process based on chase combining.
Preferably, the information compression is based on at least one combination of a first data element of the first data block with at least one second data element of the first data block. This offers an easy way, to obtain redundancy information for all information bits of the first data block.
Alternatively, the compressed second data block may be generated with an incremental redundancy process based for example on a Turbo encoding of the first data block comprising the information part and a CRC part and based on a puncturing of the encoded first data block in such a way, that redundancy information for all information bits of the information part of the first data block is contained in the compressed second data block. According to a first group of embodiments, the first data element is a first digital bit, the at least one second data element is at least one second digital bit and the at least one combination is based on a modulo-2 arithmetic of the first digital bit and the at least one second digital bit. This allows for a two-dimensional product code with a conventional error correcting code such as rate matched Turbo code horizontally and a single parity check code vertically, which enables to apply interative soft-in soft-out decoding at the second network node according to the well-known Turbo principle, wherein extrinsic information is exchanged between a so-called horizontal decoder and a so-called vertical decoder. Thereby, first extrinsic information is provided from the horizontal decoder to the vertical decoder after decoding the horizontal code, second extrinsic information is provided from the vertical decoder to the horizontal decoder after decoding the vertical code with the help of the first extrinsic information, third extrinsic information is provided from the horizontal decoder to the vertical decoder after further decoding the horizontal code with the help of the second extrinsic information and so on as described in B. Sklar, "A primer on Turbe code concepts", IEEE Communications Magazine, December 1997, pp. 94-102.

Preferably, at least one third digital bit of the first data block is selected for a further combination of the second data by a cyclic shift of one or more bit positions from the first digital bit to the at least one third digital bit. The cyclic shift allows for applying an overlap or no overlap of data elements of the first data block with respect to at least two combinations of the second data block for covering all soft bits of the first data block. This means that a further combination of the second data block may be based on a third data element of the first data block different to the first and the at least one second data element and on the first or the at least one second data element (denoted as so-called overlapping combination) or the further combination may be based on the third and a four data element of the first data block different to the first and the at least one second data element (denoted as so-called non-overlapping combination).

More preferably, the first digital bit and the at least one second digital bit are selected by a permutation. This provides besides the cyclic shift further alternatives how to combine the data elements of the first data for covering all soft bits of the first data.

The selection of the permutation may be based for example on a retransmission number of the second data block.

The first data element and the at least one second data element may be digital bits and the at least one combination may be performed before or after adding at least one CRC bit to the information bits of the first data block, after encoding the information bits and the at least one CRC bit of the first data block or after rate-matching the encoded information bits and the encoded at least one CRC bit of the first data block. This allows for several possibilities how to apply a compression mechanism, e.g. on only the information bits of the first data block, on the information bits and the CRC bits of the first data block, on the encoded information bits and CRC bits of the first data block or on rate-matched encoded information bits and CRC bits of the first data block.

According to a second group of embodiments, the second data block may comprise a combination of a first modulation symbol of the first data block with at least one second modulation symbol of the first data block. This alterative allows applying a further alternative compression mechanism based on modulation symbols such as OFDM modulation symbols applied in 3GPP LTE.

Preferably, first information indicating the cyclic shift or the permutation is transmitted from the first network node to the second network node. These further embodiments provide the benefit of flexible switching between different cyclic shift modes or different permutation modes if the HARQ process of the present invention is used. Thereby, the HARQ process of the present invention may be fine tuned to increase an error-free estimation rate at the second network node or to adapt the cyclic shift mode or permutation mode to current prevalent conditions of a transmission channel between the first and the second network node.

Alternatively, the cyclic shift and/or the permutation are pre-defined at the first and the second network node or may be configured at the first and the second network node via higher layer signaling.

More preferably, second information indicating the at least one combination of the second data is transmitted from the first network node to the second network node. This provides the advantage of a flexible switching between a conventional HARQ process such as chase combining or incremental redundancy and the HARQ process of the present invention by applying the information compression to all data elements of the information part of the first data block for providing redundancy information of all data elements and for determining the second data block as a retransmission for the first data block. More preferably, the first indication is a single bit, which allows for a minimum signaling amount from the first to the second network node to provide information, whether the second data block comprise the redundancy information of all data elements of the first data in an compressed way according to the present invention or the second data block is based on a conventional retransmission scheme such as chase combining or incremental redundancy.

The method further comprises the steps of receiving the first data block at the second network node, estimating at the second network node one of the data elements of the first data block, receiving the second data block at the second network node, performing a decompression for one of the data elements of the second data block for providing a further estimation of one of the data elements of the first data block, soft combining an estimation of the one of the data elements of the first data block with the further estimation of the one of the data elements of the first data block, and repeating the estimation step, the decompression step and the soft combining step for further data elements of the first data block.

The decompression at the receiver may be based for example on a same modulo-2 arithmetic or on an inverse modulo-2 arithmetic in comparison to the modulo-2 arithmetic performed at the transmitter. This allows for a low-complexity recovering algorithm for the first data block at the receiver. In a further embodiment, an indication for transmitting the second data block comprising the information compression of all data elements of the information part of the first data block and the redundancy information of all the data elements of the information part is implicitly provided to the second network node by receiving the second data block within a predefined time interval given from a first point of time of transmitting a first negative acknowledgement from the second network node to the first network node to a second point of time of receiving the second data block at the second network node.

The further embodiment allows avoiding signalling an indication to the second network node that the retransmission is a retransmission of the second data block determined with redundancy information of all data elements of the information part of the first data block by an information compression applied to all the data elements of the information part the first data block rather than being a conventional retransmission such as based on chase combining or incremental redundancy. A value of the predefined time interval may be adapted to quality of service parameters such a maximum transmission delay or a maximum delay jitter.

In an even further preferred embodiment, the method further comprises the step of providing an indication for the transmission of the second data comprising the information compression of all data elements of the information part of the first data block and the redundancy information of all the data elements of the information part by the first network node to the second network node and wherein the transmission of the second data block is provided by a third network node of the radio communication system. The even further preferred embodiment may be especially applied, when a relay station is used between a base station and a mobile station. The relay station may store the first data block. If a retransmission of the first data block is required, the relay station generates the second data block and transmits the second data block to the second network node such as a mobile station and the first network node such as a base station only provides the indication to the mobile station for the second data block comprising the information compression of all data elements of the information part of the first data block and redundancy information of all the data elements of the information part. Thereby, processing power at the base station can be reduced.

According to various embodiments of the invention, the invention may be applied according to different transmission scenarios such as a downlink transmission between a base station and a mobile station, an uplink transmission between a mobile station and a base station, a downlink transmission between a base station and a relay station, a downlink transmission between a relay station and a mobile station, an uplink transmission between a mobile station and a relay station and an uplink transmission between a relay station and a base station.

Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows a block diagram of a radio communication network.
Figure 2 shows a flow diagram of a method in accordance to an embodiment of the invention.
Figure 3 shows a first block diagram (a) for a first data block and three further block diagrams (b, c, d) for generating a second data block from the first data block by performing cyclic shifts of digital bits of the first data block and by modulo-2 additions of the digital bits of the first data block.
Figure 4 shows two block diagrams for generating a second data block from a first data block by performing a permutation of digital bits of the first data block, cyclic shifts of the permutated digital bits and by modulo-2 additions of the permutated digital bits.
Figure 5 shows two block diagrams for multiplexing the second data block and control information for the second data block and for preparing the second data block for a wireless transmission.
Figure 6 shows a block diagram of control signalling bits on a control channel and a further block diagram of inband signalling bits.
Figure 7 shows two block diagrams of a base station and a relay station according to the embodiments of the invention.
Figure 8 shows a block diagram of a mobile station according to the embodiments of the invention.

## DESCRIPTION OF THE EMBODIMENTS

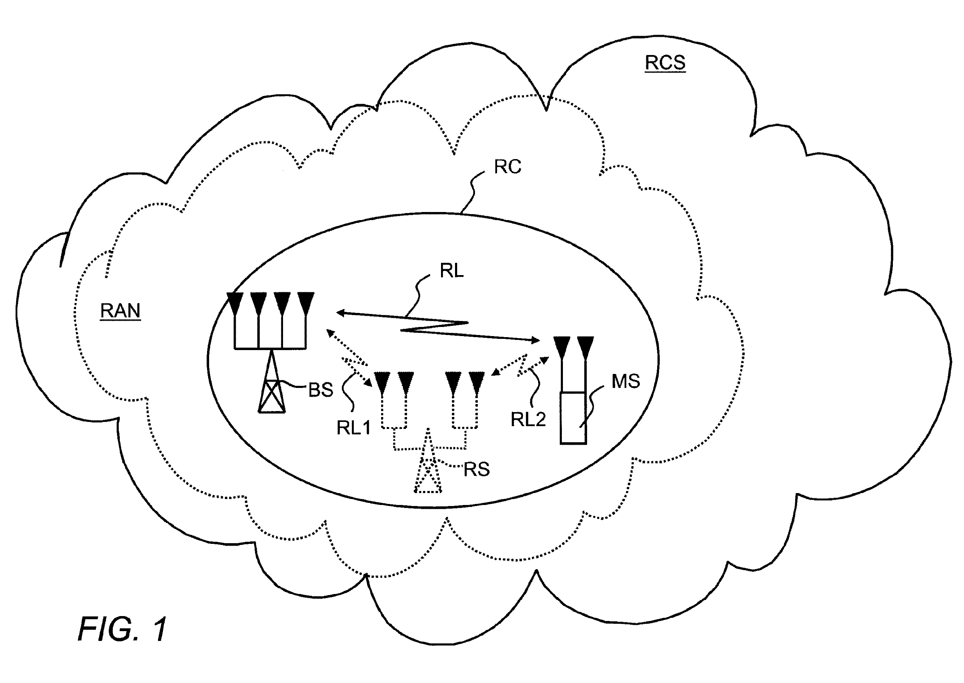

Figure 1 shows a radio communication system RCS comprising a radio access network RAN. The core network of the radio communication system RCS and connections of the radio communication system RCS to further radio communication systems, to the Internet or to fixed line communications systems are not shown for simplification.

The radio communication system RCS may be for example a 3GPP LTE radio communication network using OFDM (OFDM = Orthogonal

Frequency Division Multiplexing). In further alternatives, the radio communication system RCS may for example a 3GPP UMTS/HSPA radio communication network (UMTS = Universal Mobile Telecommunication Systems, HSPA = High Speed Packet Access), a WiMAX radio communication network (WiMAX = Worldwide Interoperability for Microwave Access) based for example on the IEEE 802.16d standard (IEEE = Institute of Electrical and Electronics Engineers), or a WLAN (WLAN) based for example on the IEEE 802.11g standard.

The radio access network RAN comprises a base station BS. The term "base station" may be considered synonymous to and/or referred to as a base transceiver station, base station, Node B, enhanced Node B, access point etc. and may describe equipment that provides connectivity via a radio link between the radio communication system RCS and one or more mobile stations.

Further base stations, connections between the base stations, connections between the base stations and network nodes of the core network and further radio cells of the radio access network RAN are not shown for simplification.

The base station BS provides wireless coverage for a specific geographical area being a radio cell RC. The term "radio cell" considered synonymous to and/or referred to as radio cell, cell, radio sector, sector etc.

In an alternative, the radio access network RAN may comprise additionally one or several relay stations for relaying radio signals between one or several base stations and one or several mobile stations.

A mobile station MS is located within a wireless coverage area of the radio cell RC.

The term "mobile station" may be considered synonymous to, and may hereafter be occasionally referred to, as a mobile unit, mobile station, mobile user, access terminal, user equipment, subscriber, user, remote station etc. The mobile station MS may be for example a cellular telephone, a portable computer, a pocket computer, a hand-held computer, a personal digital assistant or a car-mounted mobile device.

The base station BS communicates with the mobile station MS via a radio link RL. Alternatively, the base station BS may communicate with a relay station RS via a first radio link RL1 and the relay station RS may communicate with the mobile station MS via a second radio link RL2. In a further alternative, the base station BS may communicate with the relay station RS via the first radio link RL1, the relay station RS may communicate with the mobile station MS via the second radio link RL2, and the base station BS may communicate with the mobile station MS via the radio link RL for transmitting for example signalling information between the base station BS and the mobile station MS. In an even further alternative, a communication between the base station BS and the mobile station MS is relayed by more than one relay station.

The base station BS and the mobile station MS may use on a downlink from the base station BS to the mobile station MS a HARQ transmission scheme and/or may use on an uplink from the mobile station MS to the base station BS a further HARQ transmission scheme. The HARQ scheme and/or the further HARQ may be synchronous or asynchronous.

The base station BS, when receiving on the uplink a negative acknowledgement from the mobile station MS or from the relay station RS for a first downlink data block, which have been transmitted from the base station BS to the mobile station MS or to the relay station RS and which could not be recovered error free, may perform a single retransmission for the first downlink data block or the base station BS may determine second downlink data block comprising an information compression of all data elements of an information part of the first downlink data block and redundancy information of all the data elements of the information part and the base station BS may transmit via the radio link RL the second downlink data block to the mobile station MS or to the relay station RS. The first downlink data block may comprise for example user data of a service of the mobile station MS, signaling data for controlling the relay station RS or signaling data for controlling the mobile station MS.

Likewise, the mobile station MS, when receiving on the downlink a negative acknowledgement from the base station BS or from the relay station RS for a first uplink data block, which have been transmitted from the mobile station MS to the base station BS or to the relay station RS and which cannot be recovered error free, may perform a single retransmission for the first uplink data block or the mobile station MS may determine a second uplink data block with redundancy information of all data elements of the first uplink data block by applying an information compression to all the data elements and the mobile station MS may transmit via the radio link RL the second uplink data block to the base station BS or the relay station RS.

The first uplink data block may comprise for example user data of a service of the mobile station MS, signaling data requested by the relay station RS or signaling data requested by the base station station BS.

The base station BS may transmit to the mobile station MS an indication, whether to perform an uplink retransmission for the first uplink data block by applying the conventional chase combining or the conventional incremental redundancy or to perform an uplink retransmission of the second uplink data block with redundancy information of all data elements of the first uplink data block by applying an information compression of all the data elements of the first uplink data block.

If the second uplink data block comprises the redundancy information of all data elements of the first uplink data block by applying an information compression of all the data elements of the first uplink data block for example on an uplink from the mobile station to a relay station or base station, control parameters for determining and/or transmitting the second uplink data block such as information about an uplink resource block assignment, an uplink modulation scheme, an uplink coding scheme or an uplink redundancy version may be fully signaled on an uplink control channel, may be partly signaled on an uplink control channel and partly multiplexed to the second uplink data block, or may be fully multiplexed to the second uplink data block. This can be used for example in 3GPP UMTS communication systems, if the mobile station is allowed to decide about the uplink modulation scheme, the uplink coding scheme and/or the uplink redundancy version.

In further alternatives, one or several of the control parameters for determining and/or transmitting the second uplink data block may be fully signaled on a downlink control channel, may be partly signaled on a downlink control channel and partly multiplexed to downlink user data, or may be fully multiplexed to the downlink user data. In LTE for example an uplink scheduler in an enhanced Node B decides about the uplink modulation scheme, the uplink coding scheme and/or the uplink redundancy version.

In even further alternatives, some of the control parameters for determining and/or transmitting the second uplink data block may be partly predefined or implicitly defined.

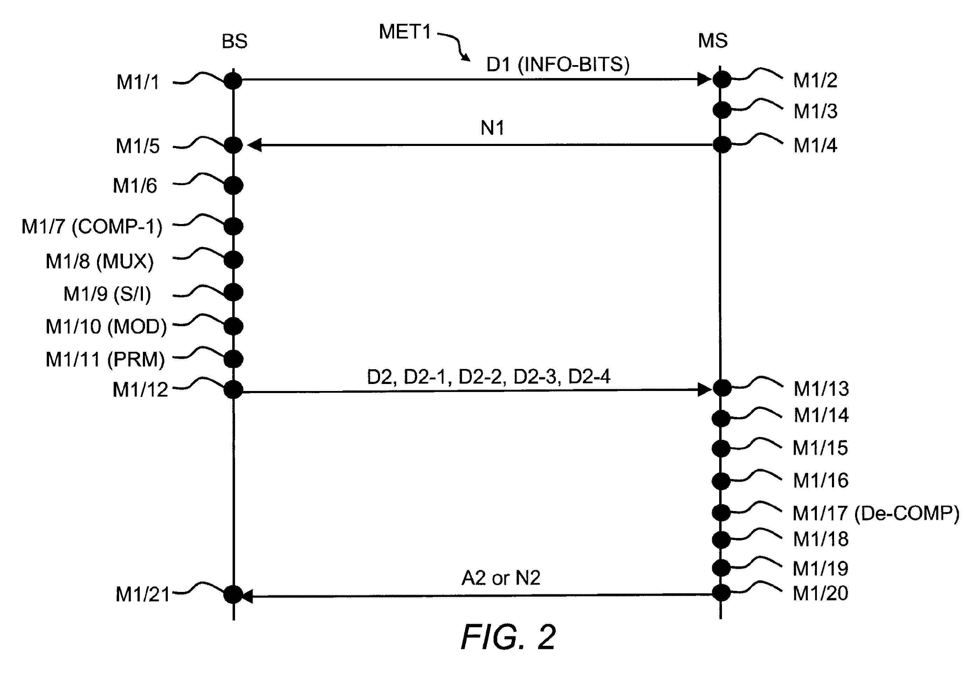

Similar alternatives are available for a downlink transmission from the base station BS to the mobile station MS and are described in more detail with respect to Figure 2.

Referring to Figure 2 a flow diagram of a method MET1 in accordance to an embodiment of the invention is shown. The number of the steps for performing the method MET1 is not critical, and as can be understood by those skilled in the art, that the number of the steps and the order of the steps may vary without departing from the scope of the invention.

The method MET1 is shown with respect to a downlink transmission from the base station BS to the mobile station MS of downlink user data for a service such as Web browsing or a VoIP call (VoIP = Voice of Internet Protocol) running at the mobile station MS and/or of a signalling command for controlling the mobile station MS. If the relay station RS as shown in Figure 1 is used between the base station BS and the mobile station MS, a similar downlink method may be performed between the base station BS and the relay station RS and/or between the relay station RS and the mobile station MS.

As can be understood by those skilled in the art, a similar method may be performed for an uplink transmission of uplink user data from the mobile station MS to the base station BS. If the relay station RS is used between the mobile station MS and the base station BS, a similar uplink method may be performed between the mobile station BS and the relay station RS and/or between the relay station RS and the base station BS.

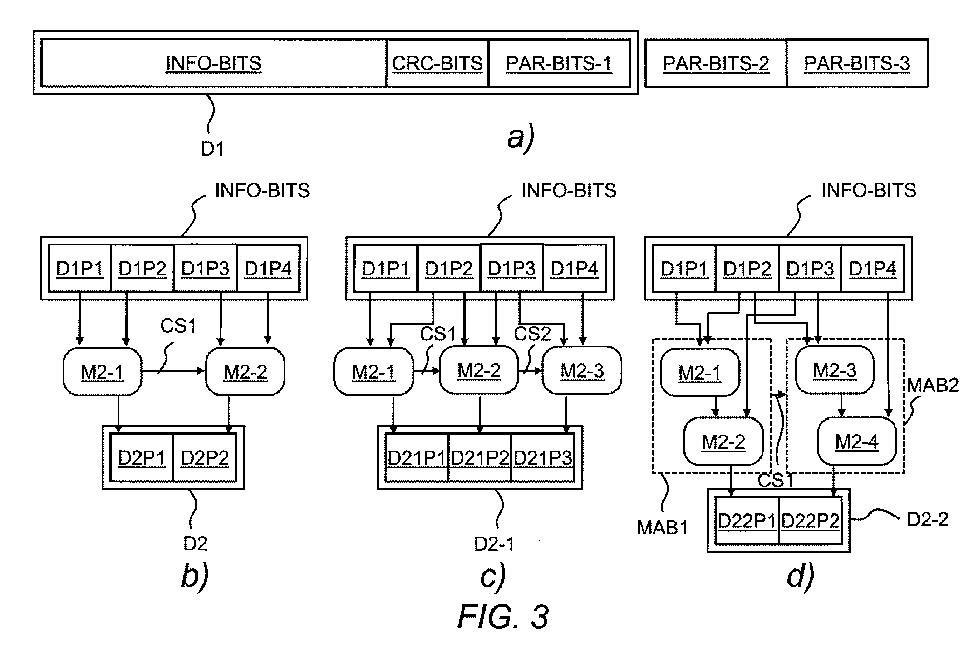

In a first step M1/1, the base station BS transmits a modulated and coded first downlink data block D1 to the mobile station MS for example in a first HARQ process in an initial transmission for example via the PDSCH (PDSCH = physical downlink shared channel) used in LTE. The first downlink data block D1 may comprise in a first part information bits INFO-BITS of the service or the signalling command, in a second part CRC bits CRC-BITS for performing a CRC of the received information bits INFO-BITS at the mobile station MS, and in a third part a first parity bit group PAR-BITS-1. (see Figure 3 a)).

The first downlink data block D1 is shown in Figure 3 a) after an encoding with a systematic code and after a so-called rate-matching with a puncturing of second and third parity bit groups PAR-BITS-2, PAR-BITS-3.

In an alternative, the first downlink data block D1 may be encoded with a non-systematic code (not shown in Figure 3).

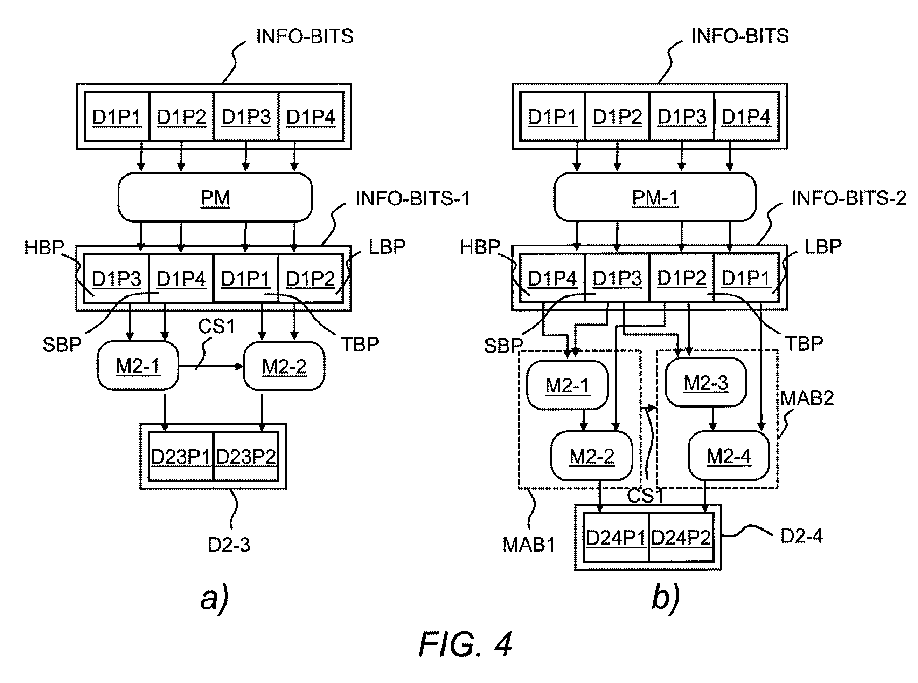

The first part with information bits INFO-BITS is a so-called payload part and may comprise exemplarily a first digital bit D1 P1, a second digital bit D1 P2, a third digital bit D1 P3, and a fourth digital bit D1 P4 (see Figure 3 b)-d) or Figure 4 a), b)). In further alternatives the information bits INFO-BITS may comprise two, three or more than four digital bits.

The second parity bit group PAR-BITS-2 and the third parity bit group PAR-BITS-3 may have been already generated at the base station BS for any required retransmission regarding the information bits INFO-BITS (see also Figure 3 a)). The first downlink data block D1 are transmitted in one or several physical resource blocks such as used for example in LTE with a frequency range of 180 kHz with 12 consecutive OFDM subcarriers and a time duration of one subframe, which is 1 ms in the case of LTE.

In a next step M1/2, the mobile station MS receives first radio frequency signals of the modulated and coded first downlink data block D1.

In a further step M1/3, the mobile station MS demodulates and decodes the first downlink data block D1, and performs a first CRC using the CRC bits CRC-BITS for determining any incorrectly received digital bit of the first downlink data block D1. If any transmission errors for one or several of the digital bits D1 P1, D1 P2, D1 P3, D1 P4 of the first downlink data block D1 have been detected by the first CRC the MS stores the demodulated and decoded first downlink data block D1 as soft bit estimates $EST\_D1P_J$ (with $J$ = 1,2,...,$N$, N: number of digital bits of the first downlink data block D1) for a future soft combining step with retransmission data. The soft bits may be represented as log likelihood ratios as described in B. Sklar, "A primer on Turbe code concepts", IEEE Communications Magazine, December 1997, pp. 94-102.

Alternatively, the mobile station MS may store the modulated and coded first downlink data block D1 or the demodulated and coded first downlink data block D1.

In a next optional step M1/4, the mobile station MS transmits a first negative acknowledgement N 1 to the base station BS, if the mobile station MS cannot recover error free the first downlink data block D1. Alternatively, an on-off keying may be used as a simplest form of ASK modulation (ASK = amplitude-shift keying) that represents digital data as the presence or absence of a carrier wave. In its simplest form, the presence of a carrier for a specific duration represents a binary one, while its absence for the same duration represents a binary zero. This means, that a NACK can be indicated from the mobile station MS to the base station BS by not transmitting a carrier wave for a predefined time after receiving the first downlink data block D1 and after having detected a transmission error for the first downlink data block D1. Thereby, no explicit positive or negative acknowledgement must be transmitted from the mobile station MS to the base station BS.

In a further alternative, a protocol may be defined, that the mobile station MS may only send an explicit positive acknowledgement message to the base station BS and an absence of the explicit positive acknowledgement message is interpreted at the base station BS as a negative acknowledgement.

In a further optional step M1/5, the base station BS receives the first negative acknowledgement N1.

In a next optional step M1/6, the base station BS verifies whether the first downlink data block D1 have been correctly or incorrectly received at the mobile station MS. In a first alternative, the base station BS determines the first downlink data block D1 as incorrectly received at the mobile station MS, if the base station BS receives the first negative acknowledgement N 1 in the step M1/5. According to a second alternative, the base station BS determines the first downlink data block D1 as incorrectly received at the mobile station MS, if the base station BS does not receive any negative acknowledgement or any positive acknowledgement for the first downlink data block D1 within a predefined time starting from the point of time when the step M1/1 is executed.

The first negative acknowledgement N1 may comprise an indicator of a quality of reception at the mobile station MS such as a signal to noise and interference ratio or soft reliability information of the decoder of the mobile station MS. The indicator of the quality of reception may indicate how much redundancy is still required at the mobile station MS for recovering the first downlink data block D1. The base station BS may use the indicator of the quality of reception to determine an amount of further parity information required for the mobile station MS to recover the first downlink data block D1 by soft combining. A result of the determined amount may be used by the base station BS to decide, if it would be better to perform a complete retransmission of the first downlink data block D1 based on chase combining, to a perform a retransmission for example of the second parity bit group PAR-BITS-2 and/or the third parity bit group PAR-BITS-3 based on incremental redundancy, or if the base station BS may generate the second downlink data block with the redundancy information of all data elements of the first downlink data block D1 and with an information compression of all the data elements of the first downlink data block D1.

Alternatively, the base station BS may decide to proactively perform a retransmission of the second downlink data block without performing a verification, whether the first downlink data block D1 have been recovered error-free at the mobile station MS. Such proactive retransmission may be required, if for example the first downlink data block D1 are part of a delay sensitive service and where a delay based on transmitting the negative acknowledgement N1 for the first downlink data block D1 and receiving the negative acknowledgement N1 at the base station BS may be not tolerable. In the following it is assumed, that the base station BS has decided to perform a retransmission for the second downlink data block with the redundancy information of all data elements of the first downlink data block D1 by applying an information compression to all the data elements of the first downlink data block D1.

In a further step M1/7 or compression COMP-1, the base station BS may generate the second downlink data block and may perform an information compression of the first downlink data block D1 by using for example one of the compression schemes as shown in Figure 3 b) to d) or Figure 4 a), b). Regarding Figures 3 b) to d) and Figure 4 a) and b) exemplarily only the information bits INFO-BITS are used for generating the second downlink data block D2.

In a first alternative, the information bits INFO-BITS and the CRC bits CRC-BITS may be used for generating the second downlink data block D2.

In a second alternative, the information bits INFO-BITS, the CRC bits CRC-BITS and the first parity bit group PAR-BITS-1 may be used for generating the second downlink data block D2.

In a third alternatives, the information bits INFO-BITS, the CRC bits CRC-BITS and the second and/or third parity bit group PAR-BITS-2, PAR-BITS-3 may be used for generating the second downlink data block D2 by combining in each case for example with a modulo-2 addition an already transmitted digital bit of the first downlink data block D1 with a not yet transmitted digital bit of the second or third parity bit group PAR-BITS-2, PAR-BITS-3 such as combining one of the information bits INFO-BITS with one of the digital bits of the second or third parity bit group PAR-BITS-2, PAR-BITS-3.

According to Figure 3 b), a first digital bit D2P1 of the second downlink data block D2 may be generated by a first combination of the first digital bit D1 P1 and the second digital bit D1 P2 of the information bits INFO-BITS as a first modulo-2 addition M2-1 of the first digital bit D1 P1 and the second digital bit D1 P2 according to following equation:

$$D2P_1 = D1P_1 + D1P_2 \qquad (1)$$

Example 1: 1+0=1

In an alternative, the first digital bit D2P1 of the second downlink data block D2 may be calculated by a first modulo-2 substraction according to following equation:

$$D2P_1 = D1P_1 - D1P_2 \qquad (2)$$

Example 2: 1-0=1

A second digital bit D2P2 of the second downlink data block D2 may be calculated by applying a cyclic shift CS1 of two digital bits and by performing a second combination as a second modulo-2 addition M2-2 of the third digital bit D1 P3 and the fourth digital bit D1 P4.

The second downlink data block D2 is provided in this case by the first and the second digital bits D2P1, D2P2.

According to Figure 3 c), a first digital bit D21 P1 of second downlink data block D2-1 may be generated by a first combination as a first modulo-2 addition M2-1 of the first digital bit D1 P1 and the second digital bit D1 P2 in a same way as shown in Figure 3 b). A second digital bit D21 P2 of the second downlink data block D2-1 may be calculated by applying a first cyclic shift CS1 of one digital bit with an overlap of one digital bit (in this case represented by the second digital bit D1 P2) with respect to the first modulo-2 addition M2-1 and by performing a second combination as a second modulo-2 addition M2-2 of the second digital bit D1 P2 and the third digital bit D1 P3. A third digital bit D21 P3 of the second downlink data block D2-1 may be calculated by applying a second cyclic shift CS2 of one digital bit with an overlap of one digital bit (the third digital bit D1 P3) with respect to the second modulo-2 addition M2-1 and by performing a third combination as a third modulo-2 addition M2-3 of the third digital bit D1 P3 and the fourth digital bit D1 P4.

The second downlink data block D2-1 are provided by the first, the second, and the third digital bits D21 P1, D21 P2, D21 P3.

According to Figure 3 d), a first digital bit D22P1 of second downlink data block D2-2 may be generated by a first modulo-2 addition block MAB1 of a first modulo-2 addition M2-1 of the first digital bit D1 P1 and the second digital bit D1 P2 and a second modulo-2 addition M2-2 of a result of the first modulo-2 addition and the third digital bit D1 P3 according to following equation:

$$D22P_1 = D1P_1 + D1P_2 + D1P_3 \qquad (3)$$

Example 3: 1+0+1=0

A second digital bit D22P2 of the second downlink data block D2-2 may be calculated by applying a cyclic shift CS1 of one digital bit with an overlap of two digital bits (the second and the third digital bit D1 P2, D1P3) with respect to the first modulo-2 addition block MAB1 and by a second modulo-2 addition block MAB2 of a third modulo-2 addition M2-3 of the second digital bit D1 P2 and the third digital bit D1 P3 and a fourth modulo-2 addition M2-4 of a result of the third modulo-2 addition and the fourth digital bit D1P4.

In this case, the second downlink data block D2-2 is provided by the first and the second digital bits D22P1, D22P2.

With respect to Figure 4 a), at first a permutation PM is applied to the digital bits D1 P1, D1 P2, D1 P3, and D1 P4 of the information bits INFO-BITS of the first downlink data block D1. A permutation type may be selected from a group of permutations.

In a first alternative, if the base station BS may apply for example four permutations, a first one of the four permutations may be selected, if a first retransmission is performed for the first downlink data block D1, a second one of the four permutations may be selected, if a second retransmission is performed for the first downlink data block D1, a third one of the four permutations may be selected, if a third retransmission is performed for the first downlink data block D1, and a fourth one of the four permutations may be selected, if a fourth retransmission is performed for the first downlink data block D1.

Retransmission number is 1 for the first retransmission (e.g. 8 ms after the first transmission for the first downlink data block D1 with a synchronous HARQ process), is 2 for the second retransmission etc. In such a case, the mobile station MS may implicitly deduce the applied permutation from the retransmission number.

Alternatively, a permutation type may be selected based on a system frame number such as transmitted on a broadcast channel from an eNB (eNB = enhanced Node B) ) in LTE and/or based on a subframe index (0...9).

The permutation PM may be for example a shift of two digital bits in a direction of a low-order bit (to the right in Figure 4 a)) and by shifting in each case a digital bit at the lowest-order bit position LBP to the highest-order bit position HBP. This means according to the Figure 4 a), that reordered information bits INFO-BITS-1 are generated with the third digital bit D1 P3 at the highest-order bit position HBP, with the fourth digital bit D1 P4 at a second-order bit position SBP, with the first digital bit D1 P1 at a third-order bit position TBP, and with the second digital bit D1 P2 at the lowest-order bit position LBP. Then, a first digital bit D23P1 of second downlink data block D2-3 may be generated by a first combination as a first modulo-2 addition M2-1 of the first digital bit D1 P3 at the highest-order bit position HBP and the fourth digital bit D1 P4 at the second-order bit position SBP.

A second digital bit D23P2 of the second downlink data block D2-3 may be calculated by applying a cyclic shift CS1 of two digital bits with no overlap to digital bits of the first modulo-2 addition and by performing a second combination as a second modulo-2 addition M2-2 of the first digital bit D1P1 at the third-order bit position TBP and the second digital bit D1 P2 at the lowest-order bit position LBP.

In this case, the second downlink data block D2-3 is provided by the first and the second digital bits D23P1, D23P2.

Regarding Figure 4 b), at first a permutation PM-1 is applied to the digital bits D1 P1, D1 P2, D1 P3, and D1 P4 of the information bits INFO-BITS of the first downlink data block D1. The permutation PM-1 may be for example an exchange of bit position j with bit position n+1-j, with n being the number of bit positions of the information bits INFO-BITS of the first downlink data block D1. Thereby, the order of the digital bits D1 P1, D1 P2, D1 P3, and D1 P4 is reversed.

This means according to the Figure 4 b), that reordered information bits INFO-BITS-2 are generated with the fourth digital bit D1 P4 at the highest-order bit position HBP, with the third digital bit D1 P3 at a second-order bit position SBP, with the second digital bit D1 P2 at a third-order bit position TBP, and with the first digital bit D1 P1 at the lowest-order bit position LBP. Then, a first digital bit D24P1 of second downlink data block D2-4 may be generated by a first combination with the first modulo-2 addition block MAB1 applied to the fourth digital bit D1P4 at the highest-order bit position HBP, the third digital bit D1 P3 at the second-order bit position SBP, and the second digital bit D1 P2 at the third-order bit position TBP.

A second digital bit D24P2 of the second downlink data block D2-4 may be calculated by applying a cyclic shift CS1 of one digital bit with an overlap of two digital bits (D1 P3, D1 P2) with respect to the first modulo-2 addition block MAB1 and by performing a second combination with the second modulo-2 addition block MAB2 applied to the third digital bit D1 P3 at the second-order bit position SBP, the second digital bit D1P2 at the third-order bit position TBP, and the first digital bit D1P1 at the lowest-order bit position LBP.

In this case, the second downlink data block D2-4 is provided by the first and the second digital bits D24P1, D24P2.

In further alternatives, a modulo-2 subtraction instead of the modulo-2 addition may be applied to the example embodiments of Figure 3 a), b), c) and Figure 4 a), b).

Regarding the embodiments of Figure 3 b) to d) and Figure 4 a), b), a number of bits of the second downlink data block D2 is smaller than a number of the information bits INFO-BITS of the first downlink data block D1.

If alternatively in addition to the information bits INFO-BITS also the CRC bits CRC-BITS may be used for generating the second downlink data block D2, a number of bits of the second downlink data block D2 is smaller than a sum of the number of the information bits INFO-BITS of the first downlink data block D1 and the number of CRC bits CRC-BITS of the first downlink data block D 1.

In general the information compression means in a digital domain depending on selected parts of the first downlink data block D1 used for the information compression, that a number of the digital bits of the second downlink data block D2 is smaller than a number of the bits of the selected parts of the first downlink data block D1. In addition, the second downlink data block D2 comprises redundancy information of all information bits INFO-BITS of the first downlink data block D1.

The step M1/7 may be performed on a rate-matched (as shown in Figure 3a)) or on a non-rate-matched first downlink data block D1.

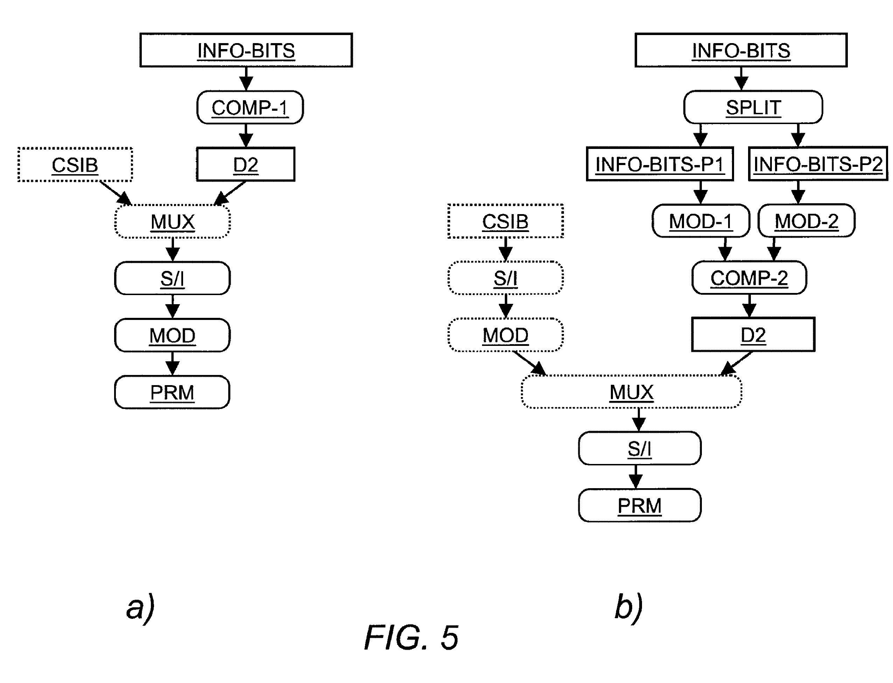

In a further optional step M1/8 or multiplexing MUX (see Figure 5 a)), the base station BS may multiplex control information CSIB of the second downlink data block D2 to the second downlink data block D2.

Control information of the second downlink data block D2 may be transmitted to the mobile station MS for being able to identify the second downlink data block D2 in a physical resource block and to get informed, that the second downlink data block D2 is a retransmission of the first downlink data block D1 and to get informed, how the retransmission of the first downlink data block D1 is generated at the base station BS.

If the base station BS may switch between a conventional retransmission such as chase combining and the retransmission of the second downlink data block D2 with redundancy information of all data elements of the first downlink data block D1 by applying an information compression to all the data elements, the information for indicating the second downlink data block D2 may be a single bit (e.g. "1": retransmission is based on the second downlink data block D2 with redundancy information and information compression according to the embodiments of the invention; "0": retransmission is based on chase combining).

Further control information may be transmitted to the mobile station MS, that the mobile station MS is able to decode, to demodulate, to descramble and/or to deinterleave the second downlink data block D2 because physical layer processing parameters such as modulation scheme or coding scheme may change between successive HARQ processes to optimize a transmission rate between the base station BS and the mobile station MS to radio conditions of a current channel between the base station BS and the mobile station MS.

Additionally, information of the cyclic shift or the permutation may be transmitted from the base station BS to the mobile station MS, if a step size of the cyclic shift and a type of the permutation is changed at the base station BS between further retransmissions based on the retransmission scheme for the second downlink data block D2.

Alternatively, the step size of the cyclic shift or the type of the permutation may be predefined at the base station BS and at the mobile station MS.

An indication of the second downlink data block D2 may be explicitly signalled to the mobile station MS or may be implicitly provided to the mobile station MS, if the method MET1 may be based for example on a synchronous HARQ process.

The control information of the second downlink data block D2 may be signalled by indications on a control channel such as an LTE downlink control channel.

In further alternatives, a first part of control information of the second downlink data block D2 may be partly signalled on the control channel (e.g. applied modulation scheme such as QPSK, 16QAM or 64QAM) and a second part of control information CSIB (see Figure 5 a)) may be partly multiplexed to the second downlink data block D2 (e.g. applied coding scheme such as transport block size or code rate, or RV parameters) or the control information CSIB of the second downlink data block D2 may be fully multiplexed to the second downlink data block D2.

Preferably, control information of the second downlink data block D2 of specific physical layer processing parameters, which may be not often changed between successive HARQ processes or which may be not often changed between successive transmissions of the same HARQ process, such as an indication of a scrambling scheme to be applied at the base station BS may be predefined at the base station BS.

In a next step M1/9 or srambling and interleaving S/I (see Figure 5 a)), the base station BS may scramble the multiplexed data with a conventional scrambling scheme and may interleave the scrambled data with a conventional interleaving scheme.

In a further step M1/10 or modulation MOD (see Figure 5 a)), the base station BS modulates the interleaved data with a modulation scheme such as QPSK, 16QAM or 64QAM.

In a next step M1/11 or physical resource mapping PRM (see Figure 5 a)), the base station BS performs a physical resource mapping of the modulated data to one or several physical resource blocks of the downlink of the radio link RL.

In a next step M1/12, the base station BS transmits the second downlink data block D2 preferably as a unicast via one or several physical resource blocks of the radio link RL for example via the PDSCH to the mobile station MS.

In a further step M1/13, the mobile station MS receives the second downlink data block D2.

In a next step M1/14, the mobile station MS determines a location of the second downlink data block D2 within a full set of available physical resource blocks.

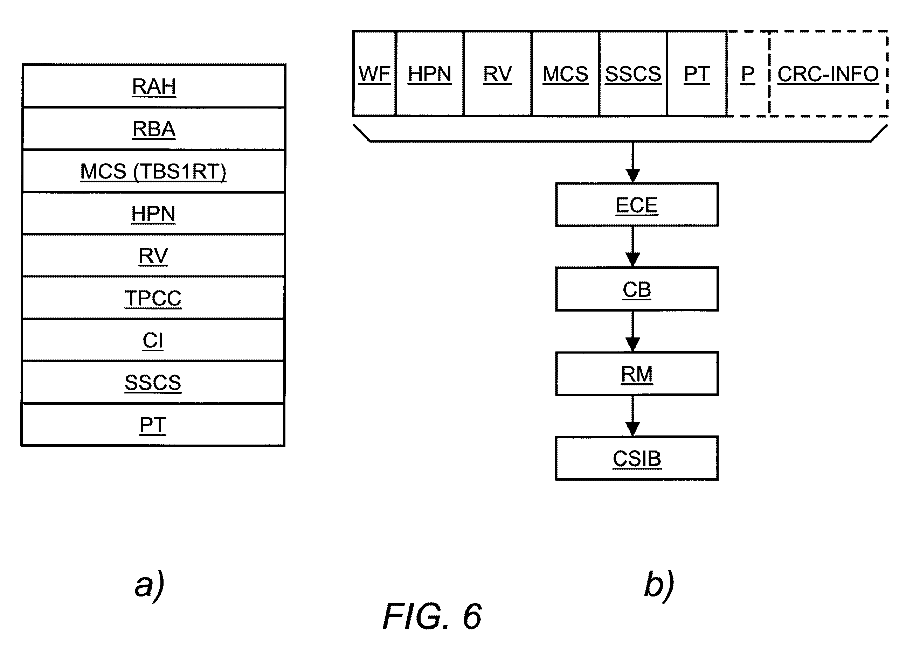

The base station BS may transmit information of the location of the second downlink data block D2 within the full set of available physical resource blocks to the mobile station MS by including the information of the location in a dedicated information field of a control signalling message such as a downlink scheduling grant used in 3GPP LTE/ HSDPA, which may be a small packet on a downlink control channel (see Figure 6 a): resource block assignment RBA).

In a further step M1/15, the mobile station MS demodulates the second downlink data block D2.

In a next step M1/16, the mobile station MS performs a descrambling, a de-interleaving and a de-multiplexing for obtaining the control information CSIB and for obtaining estimates of the digital bits $EST\_D2P_K$ of the second downlink data D2.

Information of the multiplexing scheme may be transmitted from the base station BS to the mobile station MS, that the mobile station MS is able to perform the de-multiplexing.

In a further alternative, the multiplexing scheme how to multiplex the control information CSIB and the second downlink data block D2 may be predefined at the base station BS and at the mobile station MS. In such a case, no information of multiplexing scheme must be transmitted from the base station to the mobile station MS.

In a next step M1/17 or decompression DE-COMP, the mobile station MS may compute further estimates of the digital bits $EST\_A\_D1P_J$ for the first downlink data block D1 by following exemplarily equation:

$$EST\_A\_D1P_J = EST\_D1P_{J'} \oplus EST\_D2P_K \qquad (8)$$

with:

$K$ : bit position of the estimated second downlink data block D2, which depends on chosen step size of cyclic shift and/or chosen type of the permutation,
$J$ : bit position of the estimated first downlink data block D1, for which a further estimate is computed,
$J'$: bit position of the estimated first downlink data block D1, which depends on chosen step size of cyclic shift and/or chosen type of the permutation,
$EST\_D1P_J$: estimate of digital bit D1PJ' (see Figure 3 or 4) from the initial transmission of the first downlink data block D1.
$EST\_D2P_K$ : estimate of digital bit D2PK (see Figure 3 or 4) from transmission of the second downlink data block D2 (the retransmission for the first downlink data block D1),
$\oplus$ : modulo-2 addition in soft bit domain, for example, if log likelihood ratios are used to represent soft bits a and b, then $a \oplus b \approx -sign(a)sign(b)min(|\,a\,|,|\,b\,|)$,

as described in equation 23 of B. Sklar, "A primer on Turbe code concepts", IEEE Communications Magazine, December 1997, pp. 94-102. The minus sign may be omitted depending on the soft bit representation.

A further example as of Figure 3 b) considers D2P1 = mod2(D1 P1, D1 P2) and D2P2 = mod2(D1P3, D1 P4), where mod2(a, b) denotes modulo-2 addition of two hard bits (0 or 1), and thereby following equations may be used for calculating the further estimates of the digital bits $EST\_A\_D1P_j$:

$$EST\_A\_D1P_1 = EST\_D1P_2 \oplus EST\_D2P_1$$

$$EST\_A\_D1P_2 = EST\_D1P_1 \oplus EST\_D2P_1 ,$$

$$EST\_A\_D1P_3 = EST\_D1P_4 \oplus EST\_D2P_2 ,$$

$$EST\_A\_D1P_4 = EST\_D1P_3 \oplus EST\_D2P_2 .$$

In a further step M1/18, the mobile station MS performs a soft combining of a first one of the estimated digital bits $EST\_D1P_J$ of the first downlink data block D1 and a first one of the further estimated digital bits $EST\_A\_D1P_J$ of the first downlink data block D1 to obtain a more precise estimation of the true digital bits $ENHANCED\_EST\_D1P_J$ of the first downlink data block D1. For example the estimated digital bits are represented by means of log likelihood ratios as described in B. Sklar, "A primer on Turbe code concepts", IEEE Communications Magazine, December 1997, pp. 94-102, and the log likelihood ratios are added. The step M1/18 is repeated for remaining estimated digital bits $EST\_D1P_J$ of the first downlink data block D1 and remaining further estimated digital bits $EST\_A\_D1P_J$ of the first downlink data block D1.

In a further step M1/19, the mobile station MS decodes the more precisely estimated digital bits $ENHANCED\_EST\_D1P_J$ of the first downlink data block D1 and performs a CRC check to verify any transmission errors for the more precisely estimated digital bits $ENHANCED\_EST\_D1P_J$.

Instead of the steps M1 /17, M1 /18, and M1 /19, the mobile station MS may apply a decoding concept such as described in B. Sklar, "A primer on Turbe code concepts", IEEE Communications Magazine, December 1997, pp. 94-102. Thereby, the mobile station MS applies an interative soft-in soft-out decoding according to the well-known Turbo principle, wherein extrinsic information is exchanged between a so-called horizontal decoder and a so-called vertical decoder. Thereby, first extrinsic information is provided from the horizontal decoder to the vertical decoder after decoding the horizontal code, second extrinsic information is provided from the vertical decoder to the horizontal decoder after decoding the vertical code with the help of the first extrinsic information, third extrinsic information is provided from the horizontal decoder to the vertical decoder after further decoding the horizontal code with the help of the second extrinsic information and so on. If the first downlink data block D1 cannot be recovered error free by using the second downlink data block D2, in a next step M1/20 a second negative acknowledgement N2 may be transmitted from the mobile station MS to the base station BS.

Alternatively, if the first downlink data block D1 can be recovered error free by using the second downlink data block D2, in the next step M1/20 a positive acknowledgement A2 may be transmitted from the mobile station MS to the base station BS.

In a further step M1/21, the base station BS receives the positive acknowledgement A2 or the second negative acknowledgement N2 and transmits new downlink data for the same HARQ process, if the positive acknowledgement A2 is received or executes a further retransmission for the first downlink data block D1 for the same HARQ process.

Regarding Figure 5 b) a further alternative is shown for an information compression of data elements of the first downlink data block D1, which is not based on digital bits but on complex valued modulation symbols such as OFDM symbols.

In a step SPLIT, the information bits INFO-BITS of the first downlink data block D1 may be split into two data parts INFO-BITS-P1, INFO-BITS-P2 with identical bit length (bit length of 2 bits for the examples shown on Figure 3 and Figure 4).

Alternatively, the rate-matched information bits INFO-BITS, CRC bits CRC-BITS, and parity bits PAR-BITS-1 of the first downlink data block D1 as shown in Figure 3 a) may be split into $2 \cdot N(N = 1,2,3,...)$ data parts.

Then in further steps, a first one INFO-BITS-P1 of the two data parts INFO-BITS-P1, INFO-BITS-P2 is modulated with a first modulation step MOD-1 with an adequate modulation scheme depending on a bit length of the first data part INFO-BITS-P1 (QPSK in case of a bit length of two bits) and a second one INFO-BITS-P2 of the two data parts INFO-BITS-P1, INFO-BITS-P2 is modulated with a second modulation step MOD-2.

Then, an information compression COMP-2 is performed by a combination as a complex-valued addition of modulation symbols obtained from the first and the second modulation step MOD-1, MOD-2 by adding real amplitudes a1, a2 of the modulated first data part INFO-BITS-P1 and second data part INFO-BITS-P2 and by adding imaginary amplitude values b1, b2 of the modulated first data part INFO-BITS-P1 and second data part INFO-BITS-P2 using for example following equations:

$$X = a1 + j \cdot b1 \qquad (4)$$

$$Y = a2 + j \cdot b2 \qquad (5)$$

$$Z = (a1 + a2) + j \cdot (b1 + b2) \qquad (6)$$

with:

X: modulation symbol of the first data part INFO-BITS-P1,
Y: modulation symbol of the second data part INFO-BITS-P2,
Z: combination of modulation symbols.

Alternatively, the combination may be a weighted combination using for example following equation:

$$Z' = (WF \cdot a1 + (1 - WF) \cdot a2) + j \cdot (WF \cdot b1 + (1 - WF) \cdot b2) \qquad (7)$$

with a real-valued weighting factor $WF \neq 1$ and $WF \neq 0$.

The weighting factor WF may also be complex-valued, e.g. a pseudorandom number of the form $\exp(j \cdot 2 \cdot pi \cdot n / N)$, with integer values n, N wherein $n <= N$. The complex-valued weighting factor may be used to avoid destructive combination of the first data part INFO-BITS-P1 and the second data part INFO-BITS-P2.

A weighted addition may be applied for example, if the indicator indicating the soft reliability information of the decoder of the mobile station MS has been received at the base station BS. The indicator may indicate for example that 10 % of decoded soft bits of the first data part INFO-BITS-P1 of the first downlink data block D1 are unreliable and 50 % of decoded soft bits of the second data part INFO-BITS-P2 of the first downlink data block D1 are unreliable.

Therefore, the second downlink data block D2 should comprise more information about the second data part INFO-BITS-P2 of the first downlink data block D1 than about the first data part INFO-BITS-P1 of the first downlink data block D1 and the weighting factor WF may be set for example to following value: WF = 0.1. Alternatively, each of the 2. $N$($N$ =1,2,3,...) data parts of the information bits INFO-BITS, the CRC bits CRC-BITS and the parity bits PAR-BITS-1 are modulated with a modulation step using an adequate modulation scheme depending on a bit length of each of the 2. $N$($N$ =1,2,3,...) data parts. Then in each case for two of the modulated 2. $N$($N$ =1,2,3,...) data parts of the information bits INFO-BITS, the CRC bits CRC-BITS and the parity bits PAR-BITS-1 a compression COMP-2 is performed by applying an addition of real amplitudes for two of the modulated 2·$N$($N$ = 1,2,3,...) data parts and an addition of imaginary amplitude values of the modulated 2. $N$($N$ =1,2,3,...) data parts according to the equation (6).

Optionally, the control information CSIB with one or several physical layer processing parameters of the first downlink data block D1 may be scrambled and interleaved with a scrambling and interleaving step S/I, modulated with a further modulation step MOD and multiplexed with a multiplexing step MUX to the second downlink data block D2 for example using a memory area or a data queue by putting the control information CSIB at first place of the memory area or at a beginning section of a data queue and by putting the second downlink data block D2 at second place of the memory area or at an end section of the data queue.

In an alternative, the control information CSIB is put at the second place of the memory area or at the end section of the data queue and the second downlink data block D2 is at the first place of the memory area or at the beginning section of the data queue.

A separate scrambling/interleaving scheme and a separate modulation scheme for the control information CSIB are preferably predefined at the base station BS and the mobile station MS. Alternatively, indications for the separate scrambling/interleaving scheme and the separate modulation scheme of the control information CSIB are transmitted on the downlink control channel.

In following steps, a further scrambling and interleaving step S/I and a physical resource mapping step PRM may be performed for preparing the second downlink data block D2 for transmission over the radio link RL.

At the mobile station MS a reversed processing with respect to the processing scheme shown in Figure 5 b) is performed.

A further estimate of a modulation symbol of the first data part INFO-BITS-P1 of the first downlink data block D1 can be obtained by a complex-valued substration of an estimate of the modulation symbol of the second data part INFO-BITS-P2 obtained by the initial transmission of the first downlink data block D1 from an estimated modulation symbol of the second downlink data block D2.

A further estimate of a modulation symbol of the second data part INFO-BITS-P2 of the first downlink data block D1 can be obtained by a further complex-valued substration of the estimate of the modulation symbol of the first data part INFO-BITS-P1 obtained by the initial transmission of the first downlink data block D1 from an estimated modulation symbol of the second downlink data block D2.

In case that the compression step COMP-2 is performed after modulation, the soft combining of estimated modulation symbols can be a weighted complex-valued addition, for example the weights can be computed according to the well known maximum ratio combining as described in D. Brennan, "Linear diversity combining techniques," Proceedings of the IEEE, vol. 91, no. 2, pp. 331 - 356, Feb. 2003.

Referring to Figure 6 a) a block diagram of several fields of control signalling bits transmitted on a control channel is shown. The control signalling bits may be transmitted for each transmission and retransmission of data from the base station BS to the mobile station MS.

The control channel may be for example a shared control channel in HSPA such as High Speed Shared Control Channel (HS-SCCH) or a shared control channel in LTE such as Physical Downlink Control Channel (PDCCH). A sequence of the control signalling bits on the control channel may be provided for example within a downlink scheduling grant based on the DCI format 1 for LTE Release 8 as shown in Figure 6 a).

The control signalling information on a control channel may comprise a resource allocation header RAH with 1 bit for example and a resource block assignment RBA for the second downlink data block D2 with several bits or bytes.

The resource block assignment RBA may provide beside the information of the used frequency carriers also information, which parts of the assigned resources comprise the second downlink data block D2 and which further parts comprise the control information CSIB.

The control signalling information for the second downlink data block D2 on a control channel may further comprise an indication for a modulation and/or coding scheme MCS using for example 5 bits (a transport block size TBS, if the modulation and/or coding scheme MCS1 is given such as proposed in 3GPP LTE, cf. 3GPP TS 36.213 Chapter 7.1.7.1) and/or a first HARQ process number HPN1 using for example 3 bits, and/or a redundancy version RV using for example 2 bits, and/or a TPC command TPCC (TPC = Transmission Power Control) for a physical uplink control channel, and/or an indicator CI for the transmission of the second downlink data block D2 using for example 1 bit, and/or an indicator SSCS for a step-size of the cyclic shift, and/or an indicator PT for a permutation type.

The indicator CI may comprise alternatively more than one bit and may indicate in addition to the transmission being a retransmission for the first downlink data block D1 a type of the combination of the second downlink data block D2 such as the modulo-2 addition of digital bits (see Figure 3 b) to d), Figure 4 a), b) and Figure 5 a)) or the addition of the complex valued addition of the modulated first data part INFO-BITS-P1 and the modulated second data part INFO-BITS-P2.

Instead of using the additional indicator CI, in LTE for example, an unused payload combination may be used such as the I_MCS parameter given in 3GPP TS 36.213 comprising for example a value of 29, 30 or 31. Referring to Figure 6 b) a block diagram of a sequence of inband control signalling bits as part of the second downlink data block D2 is shown. Inband means, that the control signalling bits may be multiplexed to the second downlink data block D2.

The sequence of control signalling bits may comprise a weighting factor WF for performing the addition of the modulated first and second data part INFO-BITS-P1, INFO-BITS-P2. The sequence of control signalling bits may further comprise the HARQ process number HPN for the second downlink data block D2, and/or the information of the redundancy version RV using for example 2 bits, and/or the indication of the modulation and/or coding scheme MCS using for example 5 bits, and/or the indicator SSCS for the step-size of the cyclic shift, and/or the indicator PT for the permutation type, and/or padding information P, and/or CRC information CRC-INFO.

The sequence of control signalling bits is error correction coded in an error correction coding step ECE to get codeword bits CB and the codeword bits CB are rate matched for example in a self-decodable way by applying predefined RV parameters (RV = redundancy version) in a rate matching step RM to get error correction coded and rate matched control signalling bits CSIB. Alternatively, the RV parameters and/or a coding scheme for the codeword bits CB may be implicitly defined by using a same coding scheme as applied on a downlink control channel.

The error correction coded and rate matched control signalling bits CSIB may be multiplexed to the second downlink data block D2 as shown in Figure 5 a) and b).

In further alternatives, a first group of information blocks such as the indicator CI and the indication of the modulation and/or coding scheme MCS may be signalled on a control channel and a second group of information blocks such as the indicator SSCS for the step-size of the cyclic shift and the indicator PT for the permutation type may be signalled as part of the second downlink data block D2.

Some of the physical layer processing parameters such as the scrambling and interleaving scheme may not be changed during a stay of the mobile station MS within the radio cell RC of the base station BS and therefore may predefined at the base station BS and may be predefined at the mobile station MS for example during entering the radio cell RC.

Alternatively, some of the physical layer processing parameters may be semi-statically configured at the base station BS and the mobile station MS via higher layer signalling from the base station BS to the mobile station MS such as performed during a radio link setup procedure.

Further physical layer processing parameters such as the HARQ process number HPN may be implicitly defined at the base station BS and the mobile station MS and need not explicitly signalled from the base station BS to the mobile station MS, if for example synchronous HARQ processes are used with a fixed or predefined timing between transmissions, positive or negative acknowledgements and retransmissions. Even so, the error correction coding ECE may be implicitly or pre-defined at the base station BS and the mobile station MS and need not explicitly signalled from the base station BS to the mobile station MS, if the second downlink data block D2 use a same coding scheme as applied on a downlink control channel. In case of determining the second downlink data block D2 for an uplink transmission from the mobile station MS to the base station BS, the base station BS may signal to the mobile station MS, that the mobile station MS should apply the transmission of the second downlink data block D2 as retransmission of the first downlink data block D1, may further signal, how to generate the second downlink data block D2 such as indications for a coding scheme , and/or a modulation scheme, and/or a step-size of the cyclic shift and/or the permutation type.

According to a further embodiment of the invention, the second downlink data block D2 with redundancy information of all data elements of the first downlink data block D1 and with an information compression of all the data elements of the first downlink data block D1 may be multiplexed with one or several third downlink data into a data combination and wherein the one or several third downlink data comprise redundancy information of all data elements of one or several further downlink data already transmitted to the mobile station MS and wherein also an information compression is applied to all the data elements of the one or several further downlink data. Then, the data combination is transmitted from the base station BS to the mobile station MS. Such a multiplexing scheme for obtaining the data combination is described in the European patent application EP10305698.2 according to Figure 3 a) and Figure 4. Thereby, a transmission of signaling information from the base station BS to the mobile station MS for the second downlink data block and the one or several third downlink data may require fewer radio resources.

According to an even further embodiment of the invention, the second downlink data block D2 with redundancy information of all data elements of the first downlink data block D1 and with an information compression of all the data elements of the first downlink data block D1 may be multiplexed with one or several fourth downlink data into a single combination and wherein the one or several fourth downlink data are new downlink data not yet transmitted from the base station BS to the mobile station MS. Then, the data combination is transmitted from the base station BS to the mobile station MS. Such a multiplexing scheme for obtaining the data combination is also described in the European patent application EP10305698.2 according to Figure 3 b) and Figure 4. Thereby, a transmission of signaling information from the base station BS to the mobile station MS for the second downlink data block and the one or several fourth downlink data may also require fewer radio resources.

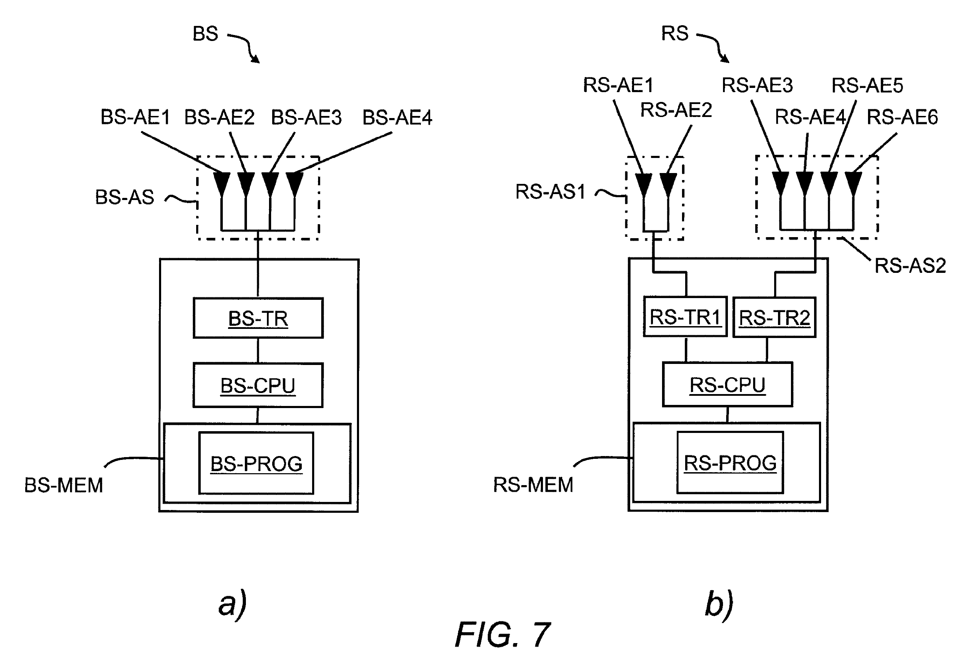

Referring to Figure 7 a) the base station BS may comprise an antenna system BS-AS, a transceiver BS-TR, a CPU (CPU = central processing unit) BS-CPU, and a computer readable medium BS-MEM. The CPU BS-CPU and the computer readable medium BS-MEM may be based on a digital baseband board of the base station BS. The CPU BS-CPU is foreseen for executing a computer readable program BS-PROG.

The antenna system BS-AS may comprise a first antenna element BS-AE1, a second antenna element BS-AE2, a third antenna element BS-AE3 and a fourth antenna element BS-AE4 for a wireless coverage area of the radio cell RC. In further alternatives, the antenna system BS-AS may comprise one, two, three or more than four antenna elements.

The transceiver BS-TR transmits the first downlink data block D1 and the second downlink data block D2 via the antenna system BS-AS to the mobile station MS and receives the positive or negative acknowledgements via the antenna system BS-AS for a downlink communication. In an alternative, a direction of the transmission of messages is reversed for an uplink communication.

The computer readable medium BS-MEM is foreseen for storing the computer readable program BS-PROG. The computer readable program BS-PROG is foreseen for executing steps of the method MET1 belonging to the base station BS.

In particular, for the downlink communication the computer readable program BS-PROG may determine the second downlink data block D2 with redundancy information of all data elements of the first downlink data block D1 by applying an information compression to all the data elements of the first downlink data block D1 wherein the data elements may be digital bits or modulation symbols or for the uplink communication, the computer readable program BS-PROG may estimate the first uplink data and the second uplink data from received radio frequency signals and may recover the first uplink data from the estimated first uplink data and from the estimated second uplink data D2.

Referring to Figure 7 b) the relay station RS may comprise a first antenna system RS-AS1, a first transceiver RS-TR1, a second antenna system RS-AS2, a second transceiver RS-TR2, a CPU RS-CPU, and a computer readable medium RS-MEM. The CPU RS-CPU and the computer readable medium RS-MEM may be based on a digital baseband board of the relay station RS. The CPU RS-CPU is foreseen for executing a computer readable program RS-PROG.

The first antenna system RS-AS1 may comprise a first antenna element RS-AE1 and a second antenna element RS-AE2. In further alternatives, the first antenna system RS-AS1 may comprise one or more than two antenna elements.

The first transceiver RS-TR1 may transmit the first downlink data block D1 and the second downlink data block D2 via the first antenna system RS-AS1 to the base station BS and receives the positive or negative acknowledgements via the first antenna system RS-AS1 for an uplink communication between the mobile station MS and the base station BS via the relay station RS. In an alternative, a direction of the transmission of messages is reversed for a downlink communication.

The second transceiver RS-TR2 may transmit the first downlink data block D1 and the second downlink data block D2 via the second antenna system RS-AS2 to the mobile station MS and receives the positive or negative acknowledgements via the second antenna system RS-AS2 for a downlink communication between the base station BS and the mobile station MS via the relay station RS. In an alternative, a direction of the transmission of messages is reversed for an uplink communication.

The computer readable medium RS-MEM is foreseen for storing the computer readable program RS-PROG. The computer readable program RS-PROG is foreseen for executing steps of the method MET1 belonging to the relay station RS.

In particular, for the downlink communication from the relay station RS to the mobile station MS, the computer readable program RS-PROG may determine the second downlink data block D2 with redundancy information of all data elements of the first downlink data block D1 by applying an information compression to all the data elements of the first downlink data block D1, wherein the data elements may be digital bits or modulation symbols or for the uplink communication from the mobile station MS to the relay station RS, the computer readable program BS-PROG may estimate first uplink data and second uplink data from received radio frequency signals and may recover the first uplink data from the estimated first uplink data and from the estimated second uplink data.

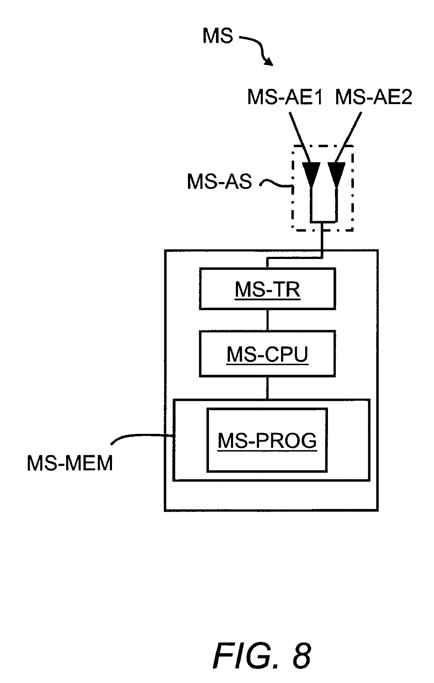

Referring to Figure 8 a mobile station MS comprises an antenna system MS-AS, a transceiver MS-TR, a CPU (CPU = central processing unit) MS-CPU, and a computer readable medium MS-MEM. The CPU MS-CPU and the computer readable medium MS-MEM may be based on a digital baseband board of the mobile station MS. The CPU MS-CPU is foreseen for executing a computer readable program MS-PROG.

The antenna system MS-AS may comprise a first antenna element MS-AE1 and a second antenna element MS-AE2. Alternatively, the antenna system MS-AS may comprise one antenna element or more than two antenna elements.

The transceiver MS-TR receives the first downlink data block D1 and the second downlink data block D2 via the antenna system MS-AS from the base station BS or the relay station RS and transmits the positive or negative acknowledgements via the antenna system MS-AS for a downlink communication. In an alternative, a direction of the transmission of messages is reversed for an uplink communication.

The computer readable medium MS-MEM is foreseen for storing the computer readable program MS-PROG. The computer readable program MS-PROG is foreseen for executing steps of the method MET1 belonging to the mobile station MS.

In particular, for the uplink communication the computer readable program BS-PROG may determine second uplink data with redundancy information of all data elements of the first uplink data by applying an information compression to all the data elements of the first uplink data, wherein the data elements may be digital bits or modulation symbols or for the downlink communication, the computer readable program BS-PROG may estimate the first downlink data block D1 and the second downlink data block D2 from received radio frequency signals and may recover the first downlink data block D1 from the estimated first downlink data block D1 and from the estimated second downlink data block D2.

**Claims**

1. A method (MET1) for retransmitting data from a first network node (BS, RS, MS) of a radio communication system (RCS) to a second network node (MS, RS, BS) of the radio communication system (RCS), said method (MET1) comprising the steps of:

   - transmitting (M1/1) a first data block (D1) from said first network node (BS, RS, MS) to said second network node (MS, RS, BS), said first data block (D1) comprises an information part (INFO-BITS),
   - determining (M1/7) at said first network node (BS, RS, MS) a second data block (D2) with redundancy information of all data elements of said information part (INFO-BITS) by applying an information compression to said all data elements, and
   - transmitting (M1/12) said second data block (D2) from said first network node (BS, RS, MS) to said second network node (MS, RS, BS).

2. Method (MET1) according to claim 1, wherein said information compression is based on at least one combination (D2P1, D2P2, D21 P1, D21 P2, D21 P3, D22P1, D22P2, D23P1, D23P2, D24P1, D24P2) of a first data element (D1P1, D1 P2, D1 P3, D1 P4, INFO-BITS-P1) of said first data block (D1) with at least one second data element (D1P1, D1 P2, D1 P3, D1 P4, INFO-BITS-P2) of said first data block (D1).

3. Method (MET1) according to claim 2, wherein said first data element (D1 P1, D1 P2, D1 P3, D1 P4) is a first digital bit, wherein said at least one second data element (D1 P1, D1 P2, D1 P3, D1 P4) is at least one second digital bit and wherein said at least one combination (D2P1, D2P2, D21 P1, D21 P2, D21 P3, D22P1, D22P2, D23P1, D23P2, D24P1, D24P2) is based on a modulo-2 arithmetic (M2-1, M2-2, M2-3) of said first digital bit and said at least one second digital bit.

4. Method (MET1) according to claim 3, wherein at least one third digital bit of said first data block (D1) is selected for a further combination (D2P1, D2P2, D21 P1, D21 P2, D21 P3, D22P1, D22P2, D23P1, D23P2, D24P1, D24P2) of said second data block (D2) by a cyclic shift (CS1, CS2) of at least one bit position from said first digital bit to said at least one third digital bit.

5. Method (MET1) according to claim 3 or 4, wherein said first digital bit and said at least one second digital bit are selected by a permutation (PM, PM-1).

6. Method (MET1) according to claim 4 or 5, wherein a first information for indicating said cyclic shift (SSCS) or said permutation (PT) is transmitted from said first network node (BS, RS, MS) to said second network node (MS, RS, BS).

7. Method (MET1) according to any of the preceding claims 3 to 6, wherein said at least one combination is performed after adding at least one cyclic redundancy check bit to said first data block (D1) or after encoding said first data block (D1) or after rate matching said first data block (D1).

8. Method (MET1) according to claim 2, wherein said information compression is based on at least one combination of a first modulation symbol of said first data block (D1) with at least one second modulation symbol of said first data block (D1).

9. Method (MET1) according to any of the preceding claims, wherein a second information (CI) for indicating said second data block (D2) as a data block with redundancy information of all data elements of said information part (INFO-BITS) of said first data block (D1) obtained by said information compression is transmitted from said first network node (BS, RS, MS) to said second network node (MS, RS, BS).

10. Method (MET1) according to any of the preceding claims, wherein said information part (INFO-BITS) is encoded with a systematic code or wherein said information part (INFO-BITS) is distributed across said first data block (D1) by a non-systematic code.

11. Method (MET1) according to any of the preceding claims, wherein said method (MET1) further comprises the steps of:

- receiving (M1/2) said first data block (D1) at said second network node (MS, RS, BS),
- estimating (M1/3) at said second network node (MS, RS, BS) at least one of said data elements of said first data block (D1),
- receiving (M1/13) said second data block (D2) at said second network node (MS, RS, BS),
- performing (M1/17) a decompression for one of said data elements of said second data block (D2) for providing a further estimation of said at least one of said data elements of said first data block (D1),
- soft combining (M1/18) an estimation of said at least one of said data elements of said first data block (D1) with said further estimation of said at least one of said data elements of said first data block (D1), and
- repeating said decompression step (M1/17) and said soft combining step (M1/18) for further data elements of said first data block (D1).

12. A first network node (BS, RS, MS) for use in a radio communication system (RCS), said first network node (MS, RS, BS) comprising:

- means (BS-CPU, BS-PROG, RS-CPU, RS-PROG, MS-CPU, MS-PROG) for determining a second data block (D2) with redundancy information of all data elements of an information part (INFO-BITS) of a transmitted first data block (D1) by applying an information compression to said all data elements, and
- means (BS-TR, BS-AS, RS-TR1, RS-AS1, RS-TR2, RS-AS2, MS-TR, MS-AS) for transmitting said first data block (D1) and said second data block (D2) to a second network node (MS, RS, BS).

13. First network node (BS, RS, MS) according to claim 12, wherein said first network node (BS, RS, MS) is a base station (BS), a relay station (RS) or a mobile station (MS).

14. A second network node (MS, RS, BS) for use in a radio communication system (RCS), said second network node (MS, RS, BS) comprising:

- means (BS-TR, BS-AS, RS-TR1, RS-AS1, RS-TR2, RS-AS2, MS-TR, MS-AS) for receiving a first data block (D1) and a second data block (D2), said second data block (D2) comprises redundancy information of all data elements of an information part (INFO-BITS) of said first data block (D1) by an information compression applied to said all data elements,
- means (BS-CPU, BS-PROG, RS-CPU, RS-PROG, MS-CPU, MS-PROG) for estimating at least one of said data elements of said first data block (D1),
- means (BS-CPU, BS-PROG, RS-CPU, RS-PROG, MS-CPU, MS-PROG) for performing a decompression for one of said data elements of said second data block (D2) for providing a further estimation of said at least one of said data elements of said first data block (D1),
- means (BS-CPU, BS-PROG, RS-CPU, RS-PROG, MS-CPU, MS-PROG) for soft combining an estimation of said at least one of said data elements of said first data block (D1) with said further estimation of said at least one of said data elements of said first data block (D1), and
- means (BS-CPU, BS-PROG, RS-CPU, RS-PROG, MS-CPU, MS-PROG) for repeating said estimation, said decompression and said soft combining for further data elements of said first data block (D1).

15. Second network node (MS, RS, BS) according to claim 14, wherein said second network node (MS, RS, BS) is a mobile station (MS), a relay station (RS) or a base station (BS).

**Amended claims in accordance with Rule 137(2) EPC.**

**1.** A method (MET1) for retransmitting data from a first network node (BS, RS, MS) of a radio communication system (RCS) to a second network node (MS, RS, BS) of the radio communication system (RCS), said method (MET1) comprising the steps of:

- encoding and rate-matching a first data block (D1) comprising information bits (INFO-BITS) and a first group of parity bits (PAR-BITS-1),
- transmitting (M1/1) said first data block (D1) from said first network node (BS, RS, MS) to said second network node (MS, RS, BS), , and
- using said rate-matched first data block (D1) or said information bits (INFO-BITS) and a further group of parity bits (PAR-BITS-2, PAR-BITS-3) for generating a second data block (D2),

**characterized in that** said method further comprises the steps of:

- determining (M1/7) at said first network node (BS, RS, MS) said second data block (D2) with redundancy information of all data elements of said information bits (INFO-BITS) by applying an information compression to said all data elements based on at least one combination (D2P1, D2P2, D21P1, D21P2, D21P3, D22P1, D22P2, D23P1, D23P2, D24P1, D24P2) of a first data element (D1P1, D1P2, D1P3, D1P4, INFO-BITS-P1) of said rate-matched first data block (D1) or of said information bits (INFO-BITS) and said further group of parity bits (PAR-BITS-2, PAR-BITS-3) with at least one second data element (D1P1, D1P2, D1P3, D1P4, INFO-BITS-P2) of said rate-matched first data block (D1) or of said information bits (INFO-BITS) and said further group of parity bits (PAR-BITS-2, PAR-BITS-3), and
- transmitting (M1/12) said second data block (D2) from said first network node (BS, RS, MS) to said second network node (MS, RS, BS).

**2.** Method (MET1) according to claim 1, wherein said first data element (D1P1, D1P2, D1P3, D1P4) is a first digital bit, wherein said at least one second data element (D1P1, D1P2, D1P3, D1P4) is at least one second digital bit and wherein said at least one combination (D2P1, D2P2, D21P1, D21P2, D21P3, D22P1, D22P2, D23P1, D23P2, D24P1, D24P2) is based on a modulo-2 arithmetic (M2-1, M2-2, M2-3) of said first digital bit and said at least one second digital bit.

**3.** Method (MET1) according to claim 2, wherein at least one third digital bit of said first data block (D1) is selected for a further combination (D2P1, D2P2, D21P1, D21P2, D21P3, D22P1, D22P2, D23P1, D23P2, D24P1, D24P2) of said second data block (D2) by a cyclic shift (CS1, CS2) of at least one bit position from said first digital bit to said at least one third digital bit.

**4.** Method (MET1) according to claim 2 or 3, wherein said first digital bit and said at least one second digital bit are selected by a permutation (PM, PM-1).

**5.** Method (MET1) according to claim 3 or 4, wherein a first information for indicating said cyclic shift (SSCS) or said permutation (PT) is transmitted from said first network node (BS, RS, MS) to said second network node (MS, RS, BS).

**6.** Method (MET1) according to claim 1, wherein said information compression is based on at least one combination of a first modulation symbol of said first data block (D1) with at least one second modulation symbol of said first data block (D1).

**7.** Method (MET1) according to claim 6, wherein said at least one combination is a complex-valued addition of said first modulation symbol and said at least one second modulation symbol by adding real amplitudes of said first modulation symbol and said at least one second modulation symbol and by adding imaginary amplitude values of said first modulation symbol and said at least one second modulation symbol.

**8.** Method (MET) according to claim 6, wherein said combination is a weighted combination.

**9.** Method (MET1) according to any of the preceding claims, wherein a second information (CI) for indicating said second data block (D2) as a data block with redundancy information of all data elements of said information part (INFO-BITS) of said first data block (D1) obtained by said information compression is transmitted from said first network node (BS, RS, MS) to said second network node (MS, RS, BS).

**10.** Method (MET1) according to claim 9, wherein said second information (CI) further indicates a type of said at least one combination as a modulo-2 addition of digital bits or as a complex-valued addition of modulation symbols.

**11.** Method (MET1) according to any of the preceding claims, wherein said method (MET1) further comprises the steps of:

- receiving (M1/2) said first data block (D1) at said second network node (MS, RS, BS),
- estimating (M1/3) at said second network node (MS, RS, BS) at least one of said data elements of said first data block (D1),
- receiving (M1/13) said second data block (D2) at said second network node (MS, RS, BS),
- performing (M1/17) a decompression for one of said data elements of said second data block (D2) for providing a further estimation of said at least one of said data elements of said first data block (D1),
- soft combining (M1/18) an estimation of said at least one of said data elements of said first data block (D1) with said further estimation of said at least one of said data elements of said first data block (D1), and
- repeating said decompression step (M1/17) and said soft combining step (M1/18) for further data elements of said first data block (D1).

**12.** A first network node (BS, RS, MS) for use in a radio communication system (RCS), said first network node (MS, RS, BS) comprising:

- means (BS-CPU, BS-PROG, RS-CPU, RS-PROG, MS-CPU, MS-PROG) for encoding and rate-matching a first data block (D1) comprising information bits (INFO-BITS) and a first group of parity bits (PAR-BITS-1),
- means (BS-TR, BS-AS, RS-TR1, RS-AS1, RS-TR2, RS-AS2, MS-TR, MS-AS) for transmitting said first data block (D1) from said first network node (BS, RS, MS) to a second network node (MS, RS, BS), and
- means (BS-CPU, BS-PROG, RS-CPU, RS-PROG, MS-CPU, MS-PROG) for using said rate-matched first data block (D1) or said information bits (INFO-BITS) and a further group of parity bits (PAR-BITS-2, PAR-BITS-3) for generating a second data block (D2),

**characterized in that** said first network node (MS, RS, BS) further comprises:

- means (BS-CPU, BS-PROG, RS-CPU, RS-PROG, MS-CPU, MS-PROG) for determining a second data block (D2) with redundancy information of all data elements of said information bits (INFO-BITS) by applying an information compression to said all data elements based on at least one combination (D2P1, D2P2, D21P1, D21P2, D21P3, D22P1, D22P2, D23P1, D23P2, D24P1, D24P2) of a first data element (D1P1, D1P2, D1P3, D1P4, INFO-BITS-P1) of said rate-matched first data block (D1) or of said information bits (INFO-BITS) and said further group of parity bits (PAR-BITS-2, PAR-BITS-3) with at least one second data element (D1P1, D1P2, D1P3, D1P4, INFO-BITS-P2) of said rate-matched first data block (D1) or of said information bits (INFO-BITS) and said further group of parity bits (PAR-BITS-2, PAR-BITS-3), and
- means (BS-TR, BS-AS, RS-TR1, RS-AS1, RS-TR2, RS-AS2, MS-TR, MS-AS) for transmitting said second data block (D2) to said second network node (MS, RS, BS).

**13.** First network node (BS, RS, MS) according to claim 12, wherein said first network node (BS, RS, MS) is a base station (BS), a relay station (RS) or a mobile station (MS).

**14.** A second network node (MS, RS, BS) for use in a radio communication system (RCS), said second network node (MS, RS, BS) comprising:

- means (BS-TR, BS-AS, RS-TR1, RS-AS1, RS-TR2, RS-AS2, MS-TR, MS-AS) for receiving an encoded and rate-matched first data block (D1), said encoded and rate-matched first data block (D1) comprises information bits (INFO-BITS) and a first group of parity bits (PAR-BITS-1), and
- means (BS-CPU, BS-PROG, RS-CPU, RS-PROG, MS-CPU, MS-PROG) for estimating at least one of said data elements of said first data block (D1),

**characterized in that** said second network node (MS, RS, BS) further comprises:

- means (BS-TR, BS-AS, RS-TR1, RS-AS1, RS-TR2, RS-AS2, MS-TR, MS-AS) for receiving a second data block (D2), said second data block (D2) comprises redundancy information of all data elements of said information bits (INFO-BITS) by performing at least one combination (D2P1, D2P2, D21P1, D21P2, D21P3, D22P1, D22P2, D23P1, D23P2, D24P1, D24P2) of a first data element (D1P1, D1P2, D1P3, D1P4, INFO-BITS-P1) of said rate-matched first data block (D1) or of said information bits (INFO-BITS) and a further group of parity bits (PAR-BITS-2, PAR-BITS-3) with at least one second data element (D1P1, D1P2, D1P3, D1P4, INFO-BITS-P2) of said rate-matched first data block (D1) or of said information bits (INFO-BITS) and said further group of parity bits (PAR-BITS-2, PAR-BITS-3),
- means (BS-CPU, BS-PROG, RS-CPU, RS-PROG, MS-CPU, MS-PROG) for performing a decompression for one of said data elements of said second data block (D2) for providing a further estimation of said at least one of said data elements of said first data block (D1),
- means (BS-CPU, BS-PROG, RS-CPU, RS-PROG, MS-CPU, MS-PROG) for soft combining an estimation of said at least one of said data elements of said first data block (D1) with said further estimation of said at least one of said data elements of said first data block (D1), and
- means (BS-CPU, BS-PROG, RS-CPU, RS-PROG, MS-CPU, MS-PROG) for repeating said estimation, said decompression and said soft combining for further data elements of said first data block (D1).

**15.** Second network node (MS, RS, BS) according to claim 14, wherein said second network node (MS, RS, BS) is a mobile station (MS), a relay station (RS) or a base station (BS).

*FIG. 1*

EP 2 525 522 A1

*FIG. 2*

EP 2 525 522 A1

| INFO-BITS | CRC-BITS | PAR-BITS-1 | PAR-BITS-2 | PAR-BITS-3 |

*a)*

D1

INFO-BITS

| D1P1 | D1P2 | D1P3 | D1P4 |

CS1

M2-1 → M2-2

| D2P1 | D2P2 |

D2

*b)*

INFO-BITS

| D1P1 | D1P2 | D1P3 | D1P4 |

CS1    CS2

M2-1 → M2-2 → M2-3

| D21P1 | D21P2 | D21P3 |

D2-1

*c)*

INFO-BITS

| D1P1 | D1P2 | D1P3 | D1P4 |

M2-1          M2-3        MAB2

M2-2          M2-4

CS1

MAB1

| D22P1 | D22P2 |    D2-2

*d)*

## FIG. 3

FIG. 4

a)

b)

FIG. 5

a)

| RAH |
| RBA |
| MCS (TBS1RT) |
| HPN |
| RV |
| TPCC |
| CI |
| SSCS |
| PT |

b)

| WF | HPN | RV | MCS | SSCS | PT | P | CRC-INFO |

ECE → CB → RM → CSIB

FIG. 6

FIG. 7

EP 2 525 522 A1

MS

MS-AE1  MS-AE2

MS-AS

MS-TR

MS-CPU

MS-PROG

MS-MEM

*FIG. 8*

Europäisches
Patentamt

European
Patent Office

Office européen
des brevets

# EUROPEAN SEARCH REPORT

Application Number

EP 11 30 5614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/061287 A1 (JOSIAM KAUSHIK [US] ET AL) 11 March 2010 (2010-03-11)<br>* paragraph [0027] - paragraph [0036] *<br>* figures 3, 4,7 *<br>* paragraph [0045] - paragraph [0046] *<br>* paragraph [0051] - paragraph [0058] *<br>----- | 1-3,5-15 | INV.<br>H04L1/18 |
| X | US 2007/253423 A1 (CHINDAPOL AIK [US] ET AL) 1 November 2007 (2007-11-01)<br>* figures 1A,2,2A,3,4,7 *<br>* paragraph [0055] - paragraph [0063] *<br>* paragraph [0040] - paragraph [0045] *<br>----- | 1-15 | |
| X | WO 2010/117646 A1 (MOTOROLA INC [US]; ARULSELVAN NAVEEN [IN])<br>14 October 2010 (2010-10-14)<br>* figure 6 *<br>* page 16, line 20 - page 19, line 13 *<br>* abstract *<br>----- | 1-3,5-7, 9,10, 12-15 | |

TECHNICAL FIELDS
SEARCHED      (IPC)

H04L

The present search report has been drawn up for all claims

| Place of search | Date of completion of the search | Examiner |
|---|---|---|
| The Hague | 16 February 2012 | Borges, Pedro |

EPO FORM 1503 03.82 (P04C01)

**ANNEX TO THE EUROPEAN SEARCH REPORT
ON EUROPEAN PATENT APPLICATION NO.**

EP 11 30 5614

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2012

| Patent document cited in search report | | Publication date | Patent family member(s) | Publication date |
|---|---|---|---|---|
| US 2010061287 | A1 | 11-03-2010 | NONE | |
| US 2007253423 | A1 | 01-11-2007 | NONE | |
| WO 2010117646 | A1 | 14-10-2010 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 10305698 A

**Non-patent literature cited in the description**

• **B. SKLAR.** A primer on Turbe code concepts. *IEEE Communications Magazine,* December 1997, 94-102

• **D. BRENNAN.** Linear diversity combining techniques. *Proceedings of the IEEE,* February 2003, vol. 91 (2), 331-356